# FASCICULE DE BREVET EUROPEEN

(11) **EP 2 046 624 B1**
(45) Date de publication et mention de la délivrance du brevet: **03.03.2010**
(21) Numéro de dépôt: 07803836.1
(22) Date de dépôt: 03.07.2007
(51) Int. Cl.: B62D 7/14, B62D 13/04

(54) **TRAIN ROULANT A ESSIEU AUTO-VIREUR POUR SEMI-REMORQUE, ACTIVE PAR UNE POUSSEE TRANSVERSALE SUPERIEURE A UN SEUIL**
FAHRWERK MIT SELBSTLENKACHSE FÜR EINEN SATTELANHÄNGER MIT AKTIVIERUNG DURCH EINEN SCHWELLENWERT ÜBERSTEIGENDEN SEITENSCHUB
RUNNING GEAR WITH SELF-STEERING AXLE FOR SEMI-TRAILER, ACTIVATED BY A TRANSVERSE THRUST THAT IS HIGHER THAN A THRESHOLD VALUE

(30) Priorité: 06.07.2006 FR 0606178
(43) Date de publication de la demande: 15.04.2009
(73) Titulaire: Société de Technologie Michelin, 63000 Clermont-Ferrand (FR); Michelin Recherche et Technique S.A., 1763 Granges-Paccot (CH)
(72) Inventeur: AUBAREDE, Francis, 63200 Pontgibaud (FR); FERLIN, Olivier, 63200 Malauzat (FR)
(74) Mandataire: Bentz, Jean-Paul
(86) Numéro de dépôt international: PCT/FR2007/001128
(87) Numéro de publication internationale: WO 2008/003859

(56) Documents cités:
- EP-A- 0 313 962
- DE-A1- 2 032 158
- DE-A1- 3 833 181
- DE-A1- 10 222 309
- DE-C1- 19 636 803
- FR-A1- 2 876 974

## Description

L'invention concerne, de façon générale, la conception des engins de transport.

Plus précisément, l'invention concerne un train roulant pour semi-remorque, destiné à permettre un roulement de la semi-remorque sur le sol dans un sens de déplacement privilégié, ce train incluant au moins un premier essieu comprenant au moins une traverse, des supports droit etc gauche respectivement liés à des extrémités droite et gauche de la traverse, et des roues droite et gauche respectivement portées par les supports droit et gauche et tournant autour d'axes droit et gauche respectifs, et connu de DE 196 36 803 C1, comprenant les caractéristiques ou préambule de la revendication 1.

L'essor des transports routiers, qui incite à augmenter la taille des véhicules, a conduit au développement de semi-remorques utilisant jusqu'à trois essieux groupés, appelées "remorques tridem".

Néanmoins, le respect des normes en vigueur impose qu'un tracteur équipé de sa semi-remorque puisse inscrire sa trajectoire dans une couronne circulaire comprise entre un rayon de 5,3 mètres et un rayon de 12,5 mètres.

La nécessité de concilier ces besoins a priori antinomiques a conduit, depuis quelques années déjà, à remplacer progressivement les essieux fixes qui équipaient autrefois les semi-remorques par des essieux permettant un braquage passif ou actif des roues dans les virages, principalement dans les ronds points ou en manoeuvre, de manière à augmenter la facilité de conduite des grands poids lourds tout en évitant ou en réduisant le ripage, et donc l'usure, des roues qui les équipent.

Il est cependant apparu que la réduction de ripage des roues sur un essieu d'une semi-remorque pouvait entraîner une augmentation du ripage des roues sur un autre essieu de la même semi-remorque, de sorte que l'amplitude et les conditions de déclenchement du braquage des roues d'une semi-remorque sont jusqu'à présent restés difficiles à identifier et à maîtriser avec des moyens simples.

Dans ce contexte, la présente invention a pour but de proposer un train roulant pour semi-remorque réalisant un meilleur compromis entre les besoins contradictoires précédemment évoqués.

A cette fin, le train roulant de l'invention, par ailleurs conforme à la définition générique qu'en donne le préambule ci-dessus, est essentiellement caractérisé en ce que les supports droit et gauche sont montés sélectivement pivotants par rapport à la traverse au moyen de liaisons à pivots droite et gauche respectives incluant des pivots droit et gauche respectifs, en ce que le pivot de chaque roue est disposé en avant de l'axe de cette roue dans le sens de déplacement privilégié, chaque roue étant ainsi soumise à un couple de pivotement en cas de virage de la remorque, en ce que ce premier essieu comprend au moins un moyen élastique précontraint associé à au moins une roue et propre à adopter sélectivement une configuration de repos ou une configuration active selon que la ou chaque roue associée est soumise à un couple de pivotement au plus égal à un seuil ou supérieur à ce seuil, et dans lesquelles, respectivement, ce moyen élastique précontraint bloque la ou chaque roue associée dans une position angulaire de roulement en ligne droite ou autorise le pivotement de cette roue, en ce que les supports droit et gauche sont montés sélectivement pivotants par rapport à la traverse indépendamment l'un de l'autre, et en ce que le premier essieu comprend des moyens élastiques précontraints droit et gauche fonctionnellement disposés entre la traverse d'une part et les supports droit et gauche respectifs d'autre part.

De préférence, le pivot de chacune des roues droite et gauche du premier essieu s'étend suivant une direction sensiblement verticale dans un plan sensiblement médian de cette roue et perpendiculaire à l'axe de cette roue.

Pour assurer la stabilité latérale de la semi-remorque et réduire le ripage des roues, le ou les essieux supplémentaires équipant le train roulant de l'invention sont tous disposés devant le premier essieu dans le sens de déplacement privilégié de la semi-remorque, et au moins l'essieu supplémentaire immédiatement voisin du premier essieu est constitué d'un essieu fixe, c'est-à-dire à roues non pivotantes.

Par la conception même du train roulant de l'invention, il est possible de prévoir que chaque moyen élastique précontraint soit totalement passif.

Dans un premier mode de réalisation possible, un tel moyen élastique précontraint comprend par exemple une cage à ressort incluant une cage, un ressort précontraint en compression dans la cage, un tirant droit monté pour entraîner sélectivement une extrémité gauche du ressort vers la droite, et un tirant gauche monté pour entraîner sélectivement une extrémité droite du ressort vers la gauche, l'un des deux tirants étant solidaire de la cage et l'autre étant monté coulissant dans la cage.

Dans un second mode de réalisation, il est possible de prévoir que chaque moyen élastique précontraint comprenne au moins un agencement de vérins hydrauliques, des premier et second accumulateurs hydropneumatiques de pression, et des premier et second circuits hydrauliques haute pression, que l'agencement de vérins comprenne des premier et second vérins montés dos à dos, présentant chacun des première et seconde chambres de travail de volumes complémentaires, et présentant respectivement des première et seconde tiges commandant les volumes des chambres de travail de ces vérins respectifs, que la première chambre du premier vérin soit reliée au premier accumulateur à travers le premier circuit hydraulique haute pression, que la seconde chambre du second vérin soit reliée au second accumulateur à travers le second circuit hydraulique haute pression, et que, dans la configuration de repos de ce moyen élastique, les tiges des premier et second vérins soient respectivement sortie et rentrée.

Pour amortir les mouvements de pivotement des roues, les premier et second circuits hydrauliques haute pression comprennent avantageusement des limiteurs de débit respectifs.

Par ailleurs, les premier et second circuits hydrauliques haute pression comprennent de préférence des électrovalves respectives interposées entre les vérins et les accumulateurs de pression et sélectivement commandées pour être passantes ou bloquantes.

En outre, la seconde chambre du premier vérin et la première chambre du second vérin sont avantageusement reliées à des circuits hydrauliques basse pression respectifs à travers des électrovalves basse pression respectives.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un véhicule à semi-remorque susceptible d'utiliser un train roulant conforme à l'invention;
- la figure 2 est une vue de dessus d'un essieu d'un train roulant conforme à l'invention et utilisant des cages à ressorts;
- la figure 3 est une vue en coupe à plus grande échelle d'une cage à ressort utilisable dans l'essieu de la figure 2;
- la figure 4 est un schéma d'un circuit hydraulique et hydropneumatique utilisable dans un essieu d'un train conforme à l'invention;
- la figure 5 est une vue de dessus d'un essieu à roues indépendantes d'un train conforme à l'invention et utilisant des vérins et des accumulateurs hydropneumatiques de pression, les roues étant représentées dans une position angulaire de roulement en ligne droite; et
- la figure 6 est une vue de dessus d'un essieu illustré à la figure 5, dont les roues sont représentées dans une position angulaire de pivotement.

Comme indiqué précédemment, l'invention concerne un train roulant destiné à équiper une semi-remorque R tirée par un véhicule tracteur T dans une direction de traction AV représentant le sens de déplacement privilégié de cette remorque sur le sol S.

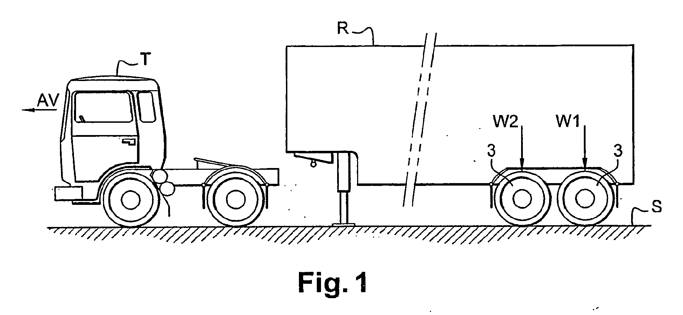

Bien que le train roulant illustré à la figure 1 comprenne un essieu arrière W1 et un essieu avant W2, il pourrait tout aussi bien comprendre un essieu arrière tel que W1 et deux essieux supplémentaires disposés tous deux devant l'essieu W1 dans la direction d'avancement privilégié AV.

L'essieu arrière W1 comprend notamment, pour chacun des côtés droit et gauche de la semi-remorque R, une traverse 1, un support de roue 2, et une roue 3.

Sur chacun de ces côtés, le support 2 situé de ce côté est lié à l'extrémité correspondante 10 de la traverse 1, et la roue 3 située de ce côté est portée par le support de roue 2 correspondant de manière à pouvoir tourner autour d'un axe Y lié à ce support.

Chacun des supports 2 à droite et à gauche de la semi-remorque est monté pivotant par rapport à la traverse 1.

Chaque support 2 est ainsi relié à la traverse 1 par une liaison incluant un pivot 4, le terme de "pivot" étant ici utilisé, par simple économie de langage, pour désigner aussi bien les pièces mécaniques permettant le pivotement de chaque support sur la traverse que l'axe du mouvement de pivotement de ce support.

Le pivot 4 de chaque roue 3 de l'essieu W1 est disposé en avant de l'axe Y de cette roue 3 dans le sens de déplacement privilégié AV, cette disposition conduisant, en cas de virage de la remorque R, à l'application sur chaque roue 3 d'un couple sollicitant cette roue vers une position de pivotement dans laquelle le ripage de cette roue est réduit.

Par ailleurs, le pivot 4 de chaque roue 3 s'étend de préférence suivant une direction sensiblement verticale dans le plan vertical médian V passant par le centre de cette roue 3, perpendiculairement à l'axe Y.

Par "direction sensiblement verticale", on entend ici une direction faisant typiquement un angle au plus égal à 5 degrés avec la verticale. En revanche, il peut être avantageux de donner au pivot 4 de chaque roue 3 une inclinaison non totalement nulle avec la verticale, par exemple de l'ordre de 2 degrés, de manière que chaque roue subisse par gravité un couple de rappel qui la sollicite vers sa position angulaire de roulement en ligne droite.

La liaison à pivot de chaque roue est avantageusement ménagée à l'intérieur du volume que délimite cette roue, c'est-à-dire dans l'espace libre à l'intérieur de sa jante.

Selon l'invention, chaque roue 3 de l'essieu arrière W1 est sollicitée, par un moyen élastique précontraint tel que 5 ou 6, vers une position angulaire de roulement en ligne droite, et n'est autorisée à pivoter qu'en cas d'application, sur cette roue, d'un couple supérieur à un seuil dépendant de la précontrainte du moyen élastique.

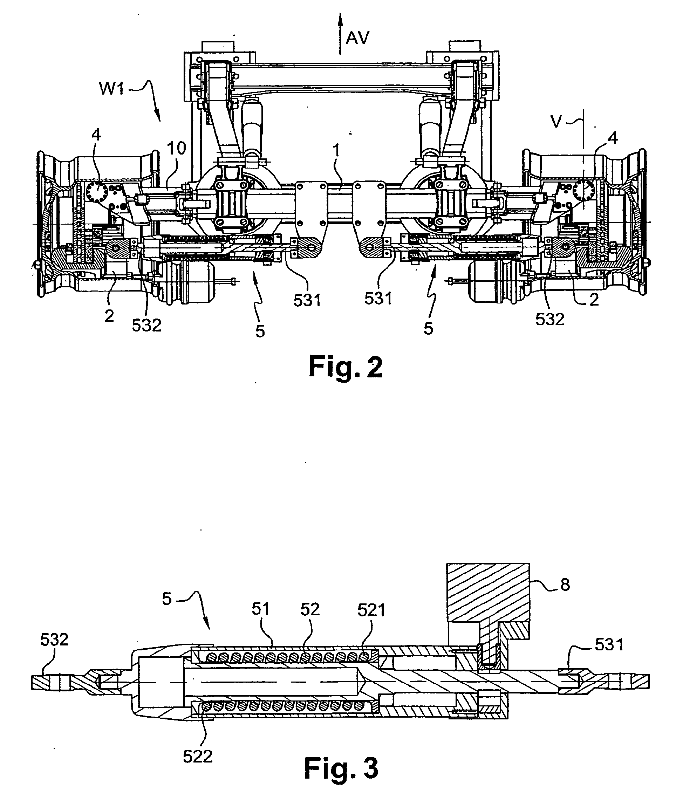

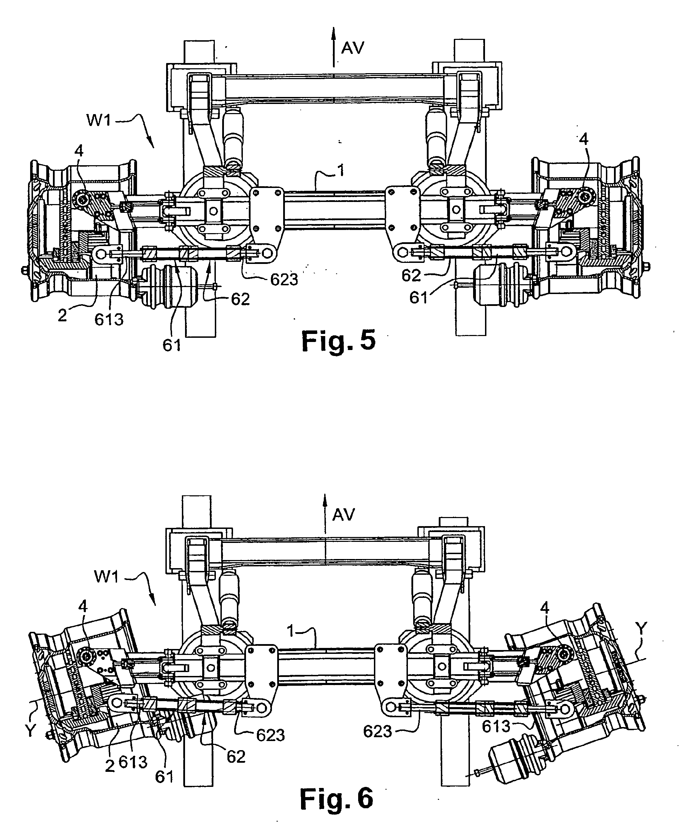

Ainsi, dans le cas où la roue 3 reçoit un couple inférieur ou égal à ce seuil, le moyen élastique précontraint 5 ou 6 adopte une configuration de repos dans laquelle il bloque cette roue 3 dans une position angulaire de roulement en ligne droite telle qu'illustrée aux figures 2 et 5.

En revanche, dans le cas où la roue 3 reçoit un couple supérieur au seuil de déclenchement du moyen élastique précontraint 5 ou 6, ce moyen adopte une configuration active dans laquelle il autorise le pivotement de cette roue.

Pour permettre aux roues 3 de suivre au mieux l'épure de Jeantaud, qui définit la position idéale des roues d'un véhicule en virage, les supports 2 droit et gauche sont montés pivotants par rapport à la traverse 1 indépendamment l'un de l'autre, comme le montre notamment la figure 2.

L'essieu W1 comprend des moyens élastiques précontraints droit et gauche, fonctionnellement disposés entre la traverse 1 d'une part et les supports 2 droit et gauche respectifs d'autre part.

Pour assurer la stabilité de la semi-remorque R, au moins l'essieu supplémentaire W2 immédiatement voisin de l'essieu arrière W1 est constitué d'un essieu fixe, et donc doté de roues non pivotantes.

Chaque moyen élastique précontraint tel que 5 ou 6 peut revêtir diverses formes de réalisation et notamment être totalement passif.

Un moyen élastique précontraint 5 totalement passif peut par exemple prendre la forme d'une cage à ressort telles qu'illustrée aux figures 2 et 3.

Cette cage à ressort comprend essentiellement une cage 51, un ressort 52, un tirant droit 531, et un tirant gauche 532.

Le ressort 52 est un ressort hélicoïdal précontraint en compression dans la cage 51 et susceptible d'être comprimé davantage par déplacement de l'un ou l'autre des tirants 531 et 532, le tirant droit 531 étant monté pour pouvoir entraîner l'extrémité gauche 522 du ressort 52 vers la droite, et le tirant gauche 532 étant monté pour pouvoir entraîner l'extrémité droite 521 du ressort 52 vers la gauche.

Comme le montre la figure 3, l'un des deux tirants, en l'occurrence le tirant droit 531, est monté coulissant à la fois dans la cage et à l'intérieur du ressort 52, alors que l'autre tirant 532 est solidaire de la cage 51.

Comme le montre encore la figure 3, un actionneur 8, par exemple constitué par un vérin pneumatique, peut être monté sur la cage 51 pour pouvoir bloquer à volonté le tirant 531 par rapport à cette cage 51, et ainsi bloquer la roue ou chaque roue 3 associée à ce moyen 5 dans une position angulaire de roulement en ligne droite.

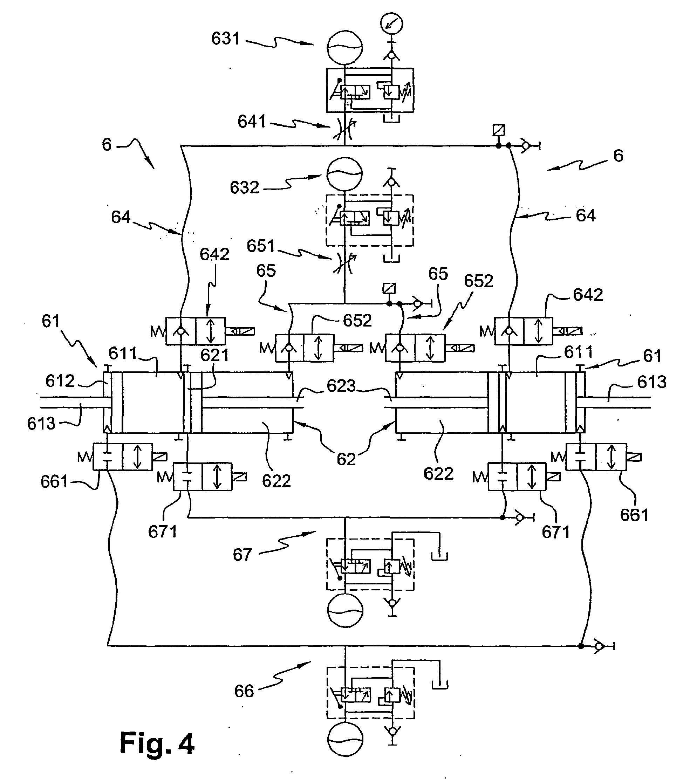

La figure 4 représente un circuit hydraulique et hydropneumatique utilisable sur un essieu à roues indépendantes tel qu'illustré aux figures 5 et 6 et essentiellement constitué de deux moyens élastiques précontraints 6.

Chaque moyen élastique précontraint 6 comprend notamment deux vérins hydrauliques 61 et 62 montés dos à dos, deux accumulateurs hydropneumatiques de pression 631 et 632, et deux circuits hydrauliques haute pression 64 et 65.

Chacun des vérins 61 et 62 présente deux chambres de travail de volumes complémentaires, à savoir les chambres 611 et 612 pour le vérin 61, et les chambres 621 et 622 pour le vérin 62.

Par ailleurs, chacun des vérins présente une tige, à savoir 613 pour le vérin 61 et 623 pour le vérin 62, chaque tige étant solidaire d'un piston séparant de façon étanche les deux chambres du vérin correspondant.

La première chambre 611 du vérin 61 est reliée à l'accumulateur 631 à travers le circuit hydraulique haute pression 64, tandis que la seconde chambre 622 du vérin 62 est reliée à l'accumulateur 632 à travers le circuit hydraulique haute pression 65.

Comme le montre la figure 5, les tiges 613 et 623 des vérins 61 et 62 sont respectivement sortie et rentrée lorsque la roue associée est dans une position angulaire de roulement en ligne droite, c'est-à-dire lorsque le moyen élastique 6 est dans sa configuration de repos.

Des électrovalves 642 et 652 (figure 4) peuvent être respectivement intégrées aux circuits 64 et 65 et interposées entre d'une part les vérins 61 et 62, et d'autre part les accumulateurs de pression 631 et 632.

Ces électrovalves 642 et 652, qui sont commandées à volonté pour être passantes ou bloquantes, sont illustrées sur la figure 4 dans leur état bloquant, interdisant ainsi tout transfert de fluide hydraulique entre les vérins 61 et 62 et les accumulateurs 631 et 632.

Lorsqu'en revanche l'électrovalve 642 est dans son état passant, tout couple appliqué à la roue et sollicitant la tige 613 vers l'intérieur du vérin 61 tend à provoquer un transfert de fluide de la chambre 611 vers l'accumulateur hydropneumatique 631.

Or, le gaz contenu dans cet accumulateur 631 est soumis à une pression non nulle, de préférence réglable par gonflage.

Ce gaz sous pression s'oppose donc au déplacement de la tige 613 aussi longtemps que la force qui est appliquée sur cette tige, et qui est liée au couple subi par la roue, n'est pas suffisante pour vaincre cette pression et l'augmenter.

Dans ce mode de réalisation, le gaz sous pression enfermé dans l'accumulateur 631 joue ainsi le rôle de milieu à la fois élastique et précontraint.

De façon semblable, lorsque l'électrovalve 652, qui est commandée en même temps que l'électrovalve 642, est dans son état passant, tout couple appliqué à la roue, et sollicitant le vérin 62 dans un sens propre à faire sortir la tige 623 de ce vérin, tend à provoquer un transfert de fluide de la chambre 622 vers l'accumulateur hydropneumatique 632.

Le gaz sous pression contenu dans cet accumulateur 632 s'oppose alors au déplacement relatif du vérin 62 par rapport à la tige 623 aussi longtemps que la force qui est appliquée sur ce vérin, et qui est liée au couple de pivotement appliqué à la roue, n'est pas suffisante pour vaincre cette pression et l'augmenter.

Pour éviter les à-coups lors du pivotement d'une roue 3 entre sa position angulaire de roulement en ligne droite et une position de pivotement ou l'inverse, les circuits hydrauliques haute pression 64 et 65 sont de préférence équipés de limiteurs de débit respectifs tels que 641 et 651.

Enfin, pour assurer le remplissage ou le vidage des chambres dont le volume varie à basse pression lors d'un pivotement de roues, la chambre 612 du vérin 61 et la chambre 621 du vérin 62 sont reliées à des circuits hydrauliques basse pression respectifs 66 et 67, de préférence à travers des électrovalves basse pression respectives 661 et 671.

Les électrodes basse pression 661 et 671 peuvent ainsi être commandées, de la même manière que les électrovalves 642 et 652, pour permettre un blocage de la roue associée grâce à l'incompressibilité du fluide hydraulique contenu dans les vérins 61 et 62.

## Revendications

1. Train roulant pour semi-remorque, destiné à permettre un roulement de la semi-remorque sur le sol dans un sens de déplacement privilégié (AV), ce train incluant au moins un premier essieu (W1) comprenant au moins une traverse (1), des supports (2) droit et gauche respectivement liés à des extrémités (10) droite et gauche de la traverse (1), et des roues (3) droite et gauche respectivement portées par les supports (2) droit et gauche et tournant autour d'axes (Y) droit et gauche respectifs, dont les supports (2) :droit et gauche sont montés sélectivement pivotants par rapport à la traverse (1) au moyen de liaisons à pivots droite et gauche respectives incluant des pivots (4) droit et gauche respectifs, en ce que le pivot (4) de chaque roue (3) est disposé en avant de l'axe (Y) de cette roue (3) dans le sens de déplacement privilégié (AV), chaque roue (3) étant ainsi soumise à un couple de pivotement en cas de virage de la remorque, en ce que ce premier essieu (W1) comprend au moins un moyen élastique précontraint (5, 6) associé à au moins une roue (3) et propre à adopter sélectivement une configuration de repos ou une configuration active selon que la ou chaque roue (3) associée est soumise à un couple de pivotement au plus égal à un seuil ou supérieur à ce seuil, et dans lesquelles, respectivement, **caractérisé en ce que** ce moyen élastique précontraint bloque la ou chaque roue (3) associée dans une position angulaire de roulement en ligne droite ou autorise le pivotement de cette roue (3), **en ce que** les supports (2) droit et gauche sont montés sélectivement pivotants par rapport à la traverse (1) indépendamment l'un de l'autre, et **en ce que** le premier essieu (W1) comprend des moyens élastiques précontraints (5, 6) droit et gauche fonctionnellement disposés entre la traverse (1) d'une part et les supports (2) droit et gauche respectifs d'autre part.

2. Train roulant suivant la revendication 1, **caractérisé en ce que** le pivot (4) de chacune des roues (3) droite et gauche du premier essieu (W1) s'étend suivant une direction sensiblement verticale dans un plan sensiblement médian de cette roue (3) et perpendiculaire à l'axe (Y) de cette roue.

3. Train roulant suivant l'une quelconque des revendications précédentes, **caractérisé en ce qu'**il comprend au moins un essieu supplémentaire(W2), **en ce que** chaque essieu supplémentaire (W2) est disposé devant le premier essieu (W1) dans le sens de déplacement privilégié (AV) de la semi-remorque, et **en ce qu'**au moins l'essieu supplémentaire (W2) immédiatement voisin du premier essieu (W1) est équipé de roues non pivotantes.

4. Train roulant suivant l'une quelconque des revendications précédentes, **caractérisé en ce que** chaque moyen élastique précontraint (5, 6) est totalement passif.

5. Train roulant suivant la revendication 4, **caractérisé en ce que** chaque moyen élastique précontraint (5) comprend une cage à ressort incluant une cage (51), un ressort (52) précontraint en compression dans la cage, un tirant droit (531) monté pour entraîner sélectivement une extrémité gauche (522) du ressort (52) vers la droite, et un tirant gauche (532) monté pour entraîner sélectivement une extrémité droite (521) du ressort (52) vers la gauche, l'un des deux tirants (531, 532) étant solidaire de la cage (51) et l'autre étant monté coulissant dans la cage (51).

6. Train roulant suivant l'une quelconque des revendications 1 à 3, **caractérisé en ce que** chaque moyen élastique précontraint (6) comprend au moins un agencement de vérins hydrauliques (61, 62), des premier et second accumulateurs hydropneumatiques (631, 632) de pression, et des premier et second circuits hydrauliques haute pression (64, 65), **en ce que** l'agencement de vérins comprend des premier et second vérins (61, 62) montés dos à dos, présentant chacun des première et seconde chambres de travail (611, 612; 621, 622) de volumes complémentaires, et présentant respectivement des première et seconde tiges (613, 623) commandant les volumes des chambres de travail de ces vérins respectifs, **en ce que** la première chambre (611) du premier vérin (61) est reliée au premier accumulateur (631) à travers le premier circuit hydraulique haute pression (64), **en ce que** la seconde chambre (622) du second vérin (62) est reliée au second accumulateur (632) à travers le second circuit hydraulique haute pression (65), et **en ce que**, dans la configuration de repos de ce moyen élastique (6), les tiges (613, 623) des premier et second vérins (61, 62) sont respectivement sortie et rentrée.

7. Train roulant suivant la revendication 6, **caractérisé en ce que** les premier et second circuits hydrauliques haute pression (64, 65) comprennent des limiteurs de débit respectifs (641, 651).

8. Train roulant suivant l'une quelconque des revendications 6 à 7, **caractérisé en ce que** les premier et second circuits hydrauliques haute pression (64, 65) comprennent des électrovalves respectives (642, 652) interposées entre les vérins (61, 62) et les accumulateurs de pression (631, 632) et sélectivement commandées pour être passantes ou bloquantes.

9. Train roulant suivant l'une quelconque des revendications 6 à 8, **caractérisé en ce que** la seconde chambre (612) du premier vérin (61) et la première chambre (621) du second vérin (62) sont reliées à des circuits hydrauliques basse pression respectifs (66, 67) à travers des électrovalves basse pression respectives (661, 671).

## Claims

1. Running gear for semitrailer, designed to allow the semitrailer to run on the ground in a preferred direction of travel (AV), this running gear including at least a first axle (WI) comprising at least one crossmember (1), right and left supports (2) respectively connected to the right and left ends (10) of the crossmember (1), and right and left wheels (3) respectively supported by the right and left supports (2) and rotating about respective right and left axes (Y), the right and left supports (2) of which are mounted selectively so as to pivot relative to the crossmember (1) by means of respective right and left pivot links including respective right and left pivots (4), the pivot (4) of each wheel (3) being placed in front of the axis (Y) of this wheel (3) in the preferred direction of travel (AV), each wheel (3) thus being subjected to a pivoting torque in the event of the trailer turning, and this first axle (W1) comprising at least one prestressed elastic means (5, 6) associated with at least one wheel (3) and capable of selectively adopting a rest configuration or an active configuration depending on whether the or each associated wheel (3) is subjected to a pivoting torque at least equal to a threshold or greater than this threshold, and in which, respectively, **characterized in that** this prestressed elastic means locks the or each associated wheel (3) in an angular straight-line running position or allows this wheel (3) to pivot, **in that** the right and left supports (2) are mounted selectively so as to pivot relative to the crossmember (1) independently of one another, and **in that** the first axle (W1) comprises right and left prestressed elastic means (5, 6) functionally placed between the crossmember (1) on the one hand and the respective right and left supports (2) on the other hand.

2. Running gear according to Claim 1, **characterized in that** the pivot (4) of each of the right and left wheels (3) of the first axle (W1) extends in a substantially vertical direction in a substantially mid-plane of this wheel (3) and perpendicular to the axis (Y) of this wheel.

3. Running gear according to any one of the preceding claims, **characterized in that** it comprises at least one additional axle (W2), **in that** each additional axle (W2) is placed in front of the first axle (W1) in the preferred direction of travel (AV) of the semitrailer, and **in that** at least the additional axle (W2) immediately adjacent to the first axle (W1) is fitted with non-pivoting wheels.

4. Running gear according to any one of the preceding claims, **characterized in that** each prestressed elastic means (5, 6) is totally passive.

5. Running gear according to Claim 4, **characterized in that** each prestressed elastic means (5) comprises a spring cage including a cage (51), a spring (52) prestressed in compression in the cage, a right tie-rod (531) mounted so as to selectively pull a left end (522) of the spring (52) to the right, and a left tie-rod (532) mounted so as to selectively pull a right end (521) of the spring (52) to the left, one of the two tie-rods (531, 532) being secured to the cage (51) and the other being mounted slidingly in the cage (51).

6. Running gear according to any one of Claims 1 to 3, **characterized in that** each prestressed elastic means (6) comprises at least one arrangement of hydraulic cylinders (61, 62), first and second hydropneumatic pressure accumulators (631, 632) and first and second high-pressure hydraulic circuits (64, 65), **in that** the arrangement of cylinders comprises first and second cylinders (61, 62) mounted back to back, each having first and second working chambers (611, 612; 621, 622) of complementary volumes, and having respectively first and second rods (613, 623) controlling the volumes of the working chambers of these respective cylinders, **in that** the first chamber (611) of the first cylinder (61) is connected to the first accumulator (631) through the first high-pressure hydraulic circuit (64), **in that** the second chamber (622) of the second cylinder (62) is connected to the second accumulator (632) through the second high-pressure hydraulic circuit (65), and **in that**, in the rest configuration of this elastic means (6), the rods (613, 623) of the first and second cylinders (61, 62) are respectively out and in.

7. Running gear according to Claim 6, **characterized in that** the first and second high-pressure hydraulic circuits (64, 65) comprise respective flow restrictors (641, 651).

8. Running gear according to either one of Claims 6 and 7, **characterized in that** the first and second high-pressure hydraulic circuits (64, 65) comprise respective solenoid valves (642, 652) interposed between the cylinders (61, 62) and the pressure accumulators (631, 632) and selectively controlled in order to be open or closed.

9. Running gear according to any one of Claims 6 to 8, **characterized in that** the second chamber (612) of the first cylinder (61) and the first chamber (621) of the second cylinder (62) are connected to respective low-pressure hydraulic circuits (66, 67) through respective low-pressure solenoid valves (661, 671).

## Patentansprüche

1. Fahrwerk für einen Sattelanhänger zum Rollen auf dem Boden in einer bevorzugten Bewegungsrichtung (AV), wobei das Fahrwerk mindestens eine erste Achse (W1) mit mindestens einer Querstrebe (1), jeweils einen mit dem rechten und linken Ende (10) der Querstrebe (1) verbundenen rechten bzw. linken Träger (2) und jeweils ein von dem rechten und linken Träger (2) gehaltenes rechtes bzw. linkes Rad (3) umfasst, welches sich um eine rechte bzw. linke Achse (Y) dreht, wobei der rechte und linke Träger (2) mittels einer rechten bzw. linken Schwenkachsenverbindungen mit einer rechten bzw. linken Schwenkachse (4) gegenüber der Querstrebe (1) wahlweise schwenkbar angebracht sind, wobei die Schwenkachse (4) jedes Rades (3) in der bevorzugten Bewegungsrichtung (AV) vor der Achse (Y) dieses Rades (3) angeordnet ist, wobei bei Kurvenlage des Sattelanhängers jedes Rad (3) somit einem Schwenkmoment ausgesetzt ist, wobei die erste Achse (W1) mindestens eine mindestens einem Rad (3) zugeordnete, vorgespannte, elastische Einrichtung (5, 6) umfasst, die wahlweise einen Ruhezustand oder einen Aktivzustand einnehmen kann je nach dem, ob das oder jedes zugeordnete Rad (3) einem Schwenkmoment ausgesetzt ist, welches höchstens gleich einem Schwellenwert ist oder oberhalb dieses Schwellenwertes liegt, **dadurch gekennzeichnet, dass** die vorgespannte, elastische Einrichtung das oder jedes zugeordnete Rad (3) in einer Winkelrollposition gemäß Geradeausfahrt blockiert oder das Schwenken dieses Rades (3) zulässt, dass der rechte und linke Träger (2) jeweils wahlweise, voneinander unabhängig gegenüber der Querstrebe (1) schwenkbar angebracht sind und dass die erste Achse (W1) eine rechte und eine linke vorgespannte, elastische Einrichtung (5, 6) umfasst, die funktional zwischen der Querstrebe (I) einerseits und dem rechten bzw. linken Träger (2) andererseits angebracht sind.

2. Fahrwerk nach Anspruch 1, **dadurch gekennzeichnet, dass** sich die Schwenkachse (4) des rechten und linken Rades (3) der ersten Achse (W1) im Wesentlichen senkrecht zu einer im Wesentlichen Mittelebene dieses Rades (3) und senkrecht zur Achse (Y) dieses Rades erstreckt.

3. Fahrwerk nach einem der vorstehenden Ansprüche, **dadurch gekennzeichnet, dass** es mindestens eine zusätzliche Achse (W2) umfasst, dass jede zusätzliche Achse (W2) in der bevorzugten Bewegungsrichtung (AV) des Sattelanhängers vor der ersten Achse (W1) angeordnet ist und dass mindestens eine zusätzliche Achse (W2), die in direkter Nachbarschaft zur ersten Achse (W1) steht, mit nicht schwenkbaren Rädern ausgestattet ist.

4. Fahrwerk nach einem der vorstehenden Ansprüche, **dadurch gekennzeichnet, dass** jede vorgespannte, elastische Einrichtung (5, 6) völlig passiv ist.

5. Fahrwerk nach Anspruch 4, **dadurch gekennzeichnet, dass** jede vorgespannte, elastische Einrichtung (5) ein Federgehäuse umfasst, das ein Gehäuse (51), eine auf Druck vorgespannte Feder (52) in dem Gehäuse, einen rechtsseitigen Zuganker (531) zum wahlweise Antreiben des linken Endes (522) der Feder (52) nach rechts und einen linksseitigen Zuganker (532) zum wahlweisen Antreiben des rechten Endes (521) der Feder (52) nach links umfasst, wobei einer der beiden Zuganker (531, 532) mit dem Gehäuse (51) fest verbunden ist und der andere Zuganker in dem Gehäuse (51) verschiebbar angebracht ist,

6. Fahrwerk nach einem der Ansprüche 1 bis 3, **dadurch gekennzeichnet, dass** jede vorgespannte, elastische Einrichtung (6) mindestens eine Anordnung hydraulischer Zylinder (61, 62), einen ersten und zweiten hydropneumatischen Druckspeicher (631, 632) und einen ersten und zweiten hydraulischen Hochdruckkreislauf (64, 65) umfasst, dass die Zylinderanordnung einen ersten und einen zweiten, Rücken an Rücken montierte Zylinder (61, 62) umfasst, von denen jeder eine erste und eine zweite Arbeitskammer (611, 612, 621, 622) mit komplementären Volumina aufweist und jeweils eine erste und zweite, das Volumen der Arbeitskammern der jeweiligen Zylinder bestimmende Stange (613, 623) umfasst, dass die erste Kammer (611) des ersten Zylinders (61) über den ersten hydraulischen Hochdruckkreislauf (64) mit dem ersten Druckspeicher (631) verbunden ist, dass die zweite Kammer (622) des zweiten Zylinders (62) über den zweiten hydraulischen Hochdruckkreislauf (65) mit dem zweiten Druckspeicher (632) verbunden ist und dass im Ruhezustand der elastischen Einrichtung (6) die Stangen (613, 623) des ersten und zweiten Zylinders (61, 62) jeweils ausgefahren und eingefahren sind.

7. Fahrwerk nach Anspruch 6, **dadurch gekennzeichnet, dass** der erste und zweite hydraulische Hochdruckkreislauf (64, 65) jeweils Abgabebegrenzer (641, 651) umfassen.

8. Fahrwerk nach einem der Ansprüche 6 oder 7, **dadurch gekennzeichnet, dass** der erste und zweite hydraulische Hochdruckkreislauf (64, 65) jeweils Elektroventile (642, 652) umfasst, die zwischen den Zylindern (61, 62) und den Druckspeichern (631, 632) angeordnet sind und wahlweise durchlässig oder blockierend geschaltet werden.

9. Fahrwerk nach einem der Ansprüche 6 bis 8, **dadurch gekennzeichnet, dass** die zweite Kammer (612) des ersten Zylinders (61) und die erste Kammer (621) des zweiten Zylinders (62) über jeweilige Niederdruck-Elektroventile (661, 671) mit jeweiligen hydraulischen Niederdruckkreisläufen (66, 67) verbunden sind.
